# EUROPÄISCHE PATENTSCHRIFT

(11) **EP 1 261 428 B1**
(45) Veröffentlichungstag und Bekanntmachung des Hinweises auf die Patenterteilung: **09.08.2006**
(21) Anmeldenummer: 01909778.1
(22) Anmeldetag: 19.02.2001
(51) Int. Cl.: B01L 3/02, G01N 1/38

(54) **DISPENSER**
DISPENSER
DISTRIBUTEUR DOSEUR

(30) Priorität: 22.02.2000 DE 10008003
(43) Veröffentlichungstag der Anmeldung: 04.12.2002
(73) Patentinhaber: QIAGEN GmbH, 40724 Hilden (DE)
(72) Erfinder: COLLASIUS, Michael, 8634 Hombrechtikon (CH); LUTZE, Konstantin, CH-8634 Hombrechtikon (CH); FINK, Pius, CH-8634 Hombrechtikon (CH); DI BERARDINO, Marco, CH-8712 Stäfa (CH)
(74) Vertreter: Zimmermann & Partner
(86) Internationale Anmeldenummer: PCT/EP2001/001855
(87) Internationale Veröffentlichungsnummer: WO 2001/062388

(56) Entgegenhaltungen:
- EP-A- 0 283 137
- EP-A- 0 645 564
- EP-A- 0 690 294
- WO-A-00/02047
- DE-A- 19 649 888
- US-A- 3 958 724
- US-A- 4 106 699
- US-A- 4 787 822
- US-A- 5 589 077
- US-A- 5 823 388

## Beschreibung

### Technisches Gebiet

Die Erfindung betrifft ein Verfahren zum automatisierten und fein dosierten Dispensieren von Flüssigkeiten.

### Stand der Technik

In vielen Anwendungsbereichen der Technik ist es erforderlich, eine oder mehrere Flüssigkeiten in jeweils genau bestimmten Mengen zu bemessen und anschließend einer Anwendung zuzuführen. Insbesondere in den Bereichen der Chemie und auch der Biotechnologie kommt es häufig vor, dass einer von mehreren Verfahrensschritten eines Reaktionsablaufschemas darin besteht, eine Flüssigkeit in feindosierter Menge zu bemessen und der Reaktion zuzuführen. Unter dem Begriff Flüssigkeit ist hierbei grundsätzlich jede chemische Substanz zu verstehen, die in flüssiger Form vorliegt.

Das Bemessen und Zuführen von Flüssigkeiten kann manuell mit Hilfe von Pipetten oder auch mit Hilfe anderer Zwischenspeicherelemente erfolgen. Ein solches manuelles Vorgehen bedarf jedoch einerseits einer ausführenden Person und ist andererseits zumeist sehr zeitaufwendig. Aus diesem Grund eignet sich das manuell vorgenommene Bemessen und Zuführen von Flüssigkeiten nur im Experimentierstadium oder bei einer nur sehr geringen Wiederholrate. Im Falle von Anwendungen, bei denen die Wiederholrate sehr hoch ist oder bei denen ein sehr gleiches, eventuell zeitlich auch aufeinander abgestimmtes Bemessen und Zufuhren einer oder mehrere Flüssigkeiten erforderlich ist, wird in der Regel versucht, den Ablaufprozess maschinell zu automatisieren.

So ist beispielsweise bereits seit einigen Jahren das System "BioRobot 9600" des Anmelders auf dem Markt, mit Hilfe dessen molekularbiologische Verfahrensabläufe, wie beispielsweise das Waschen und Extrahieren von Nukleinsäuren oder das Isolieren von RNA und/oder DNA, automatisiert ausgeführt werden. Der "BioRobot 9600" ist z.B. beschrieben in dem Handbuch "QIAGEN BioRobot 9600", 08/99, z.B. Seite 1-1 bis 1-3.

So wird zur Erzeugung hochreinen DNA-Plasmides nacheinander mehrere Arbeitsschritte abgearbeitet, wobei die Abarbeitung der einzelnen Arbeitsschritte in unterschiedlichen, genau festgelegten Zeitabständen zueinander erfolgt. Mittels einer Einzelpipetiervorrichtung werden zunächst Zellkulturen in Behältnisse gegeben, wie beispielsweise Einzel- oder Mehrfachröhrchen. Hier werden die Zellkulturen wieder in Suspension gegeben und lysiert. Anschließend werden die in Lösung befindlichen Zellkulturen mittels der Pipetiervorrichtung in weitere Behältnisse überführt. Hier erfolgt üblicherweise eine Filterung, mittels derer die Lysate gereinigt werden. Zur Filterung eignen sich hierzu insbesondere spezielle Behältnisse, in deren Böden jeweils geeignete Filterelemente eingelegt sind. Über eine Öffnung in der Unterseite der Behältnisse kann in den Behältnissen Unterdruck angelegt werden, wodurch die Lösung durch die Filter gesaugt und hierbei gefiltert wird. Alternativ könnten die Proben zur Separation in herkömmlicher und jedoch zeitaufwendiger Weise auch zentrifugiert werden. Nach dem Filtern wird in einem weiteren Verfahrensschritt die DNA mittels einer geeigneten Membran adsorbiert. Die zurückbleibende DNA-freie Lösung lässt sich in einem Spülvorgang entfernen. Durch einen sich anschließenden Elutionschritt wird dann die gewünschte DNA gewonnen.

US 5,589,077 beschreibt einen Flüssigkeitsfilter und ein Versorgungssystem mit einer Hauptleitung zur Verbindung eines Flüssigkeitseinführungsteil mit einem Flüssigkeitsversorgungsteil, und einer ersten Zirkulierungsleitung zur Rückführung einer Flüssigkeit in die Hauptleitung.

US 5,823,388 beschreibt eine Methode zur Abgabe einer vorgegebenen Flüssigkeitsmenge von einer Abgabepumpe. Dabei ist ein Rückzirkulierungsweg von der Abgabepumpe zu einem Massenspeicher so ausgestaltet, dass er weitgehend identisch mit dem Abgabeweg selbst ist.

EP 0 283 137 beschreibt ein Flüssigkeitsabgabesystem für z.B. Farbe mit einem Flüssigkeitsreservoir, einem Zirkulationspfad für die Flüssigkeit zu und von dem Reservoir, einer Pumpe für einen Überdruckfluss um den Weg herum, einem Drei-Wege-Ventil in dem Weg, der zur Flüssigkeitsverteilung von dem Weg über ein zweites Ventil zu einer Abgabedüse steuerbar ist.

US 5,660,792 beschreibt einen Einzelnadelhalter, an den eine Einzelnadeldüse angeschlossen ist, um Probelösung in Teströhren, die in einem Probenhalterungsgestell angeordnet sind, zu bringen und in Festkörperentnahmeröhren hineinzugeben.

Die aus dem Stand der Technik bekannten Dispensiervorrichtungen sind zumeist als Einzeldispensiervorrichtungen ausgeführt, so dass das Bemessen und Zuführen einer Flüssigkeit in mehrere Behälter nur sequentiell, d.h. nacheinander, erfolgen kann. Die Zumessvorrichtung selbst besteht üblicherweise lediglich aus einer Schlauchleitung, in der mittels einer Pumpe ein Flüssigkeitsdruck aufgebaut wurde. Kurz vor dem Auslass der Schlauchleitung befindet sich in der Regel ein Ventil, welches bei Bedarf kurzzeitig geöffnet wird. Die hierbei durch das Ventil strömende Flüssigkeitsmenge ist demgemäß unmittelbar von dem in der Schlauchleitung herrschenden Vordruck abhängig. Insbesondere bei häufigem Öffnen des Ventils in zueinander unterschiedlichen Zeitabständen kommt es in Abhängigkeit der Pumpenleistung zwischen den einzelnen Ventilöffnungsvorgängen zu keinem vollständigen Druckaufbau auf den Nenndruckwert. Demgemäß schwankt der in der Leitung anliegende Vordruck teilweise erheblich, so dass ungleiche Flüssigkeitsmengen abgegeben werden.

### Darstellung der Erfindung

Der Erfindung liegt daher die Aufgabe zugrunde, ein Verfahren zum automatisierten und feindosierten Dispensieren von Flüssigkeiten sowie ein in einer erfindungsgemäßen Vorrichtung einsetzbares Dispensierelement zur Verfügung zu stellen, wobei die aus dem Stand der Technik bekannten Probleme weitgehend vermieden werden sollen. Insbesondere soll mit Hilfe der Erfindung auch bei einer hohen Wiederholrate des Dispensiervorgangs, wobei die Dispensiervorgänge auch in unterschiedlichen Zeitabständen zueinander auftreten können, jeweils eine gleichbleibende Menge an Flüssigkeit abgegeben werden.

Diese Aufgabe wird durch ein Verfahren gemäß unabhängigem Anspruch 1 gelöst.

Weitere Vorteile, Merkmale, Aspekte und Details der Erfindung ergeben sich aus den abhängigen Ansprüchen, der Beschreibung und den beigefügten Zeichnungen. Die Erfindung ist nicht auf den Inhalt der Ansprüche beschränkt.

Die obig geschilderte Aufgabe kann durch eine Dispensiervorrichtung zum weitgehend automatisierten und feindosierten Dispensieren von Flüssigkeiten, bevorzugt von Reagenzien, gelöst werden. Die Dispensiervorrichtung umfasst hierzu eine erste Leitung, die mit einem Vorratselement, beispielsweise eine Vorratsflasche, zur Bevorratung der zu dispensierenden Flüssigkeit verbunden werden kann. Ferner weist die Dispensiervorrichtung ein Förderelement zum Fördern der zu dispensierenden Flüssigkeit durch die erste Leitung auf. Die Flüssigkeit wird hierbei mittels des Förderelements aus dem Vorratselement angesaugt und in die erste Leitung gefördert. Des Weiteren ist in Förderrichtung der Flüssigkeit nach dem Förderelement eine Verschleißvorrichtung zum schnellen Verschließen und schnellen Öffnen der ersten Leitung, vorzugsweise ein Magnetventil, angeordnet. Vorzugsweise ist die Verschleißvorrichtung in geringem Abstand zu dem Ende der zweiten Leitung oder auch am Ende der zweiten Leitung angeordnet.

In dem Bereich zwischen dem Förderelement und der Verschließvorrichtung ist ferner bevorzugt eine Vorrichtung zur Regulierung des Druckes der Flüssigkeit angeordnet. Das Förderelement, üblicherweise eine Pumpe, bevorzugt eine Membranpumpe, fordert während des Dispensiervorgangs vorzugsweise kontinuierlich Flüssigkeit aus dem Vorratselement in die erste Leitung. Hierzu ist das Förderelement zweckmäßig, aber nicht zwingend, mittels einer zweiten Leitung mit dem Vorratselement, beispielsweise einer Vorratsflasche verbunden, die die zu dispensierende Flüssigkeit enthält. Befindet sich die Verschließvorrichtung in ihrer Verschlussposition, d.h. verschließt die Verschließvorrichtung die erste Leitung und verhindert somit den Abfluss der Flüssigkeit aus der ersten Leitung, so kommt es zu einem Aufstau der Flüssigkeit in dem Bereich zwischen dem Förderelement und der Verschließvorrichtung. Mittels der Vorrichtung zur Regulierung des Druckes der Flüssigkeit, die im einfachsten Fall als Überdruckventil vorzugsweise mit einer Rückführung der Flüssigkeit ausgeführt ist, wird der Druck in dem Bereich zwischen dem Förderelement und der Verschließvorrichtung auf einen Grenzwert begrenzt. Wird nun die Verschließvorrichtung kurzzeitig geöffnet, so entströmt in Abhängigkeit der Öffnungsdauer der Verschließvorrichtung, des Vordruckes, d.h. des Druckes der Flüssigkeit in dem Bereich der ersten Leitung zwischen dem Förderelement und der Verschließvorrichtung, und des Strömungswiderstandes der Flüssigkeitsströmung eine bestimmte Menge der Flüssigkeit in den Bereich hinter der Verschließvorrichtung. Von hier kann die Flüssigkeit zweckmäßig über einen Verteilerkopf oder auch eine Einzelpipetiervorrichtung der jeweiligen Anwendung zugeführt werden.

Bei einem ausreichend großen Volumen des Leitungsbereichs zwischen dem Förderelement und der Verschließvorrichtung, das somit als Druckspeichervolumen fungiert, und/oder einer ausreichend großen Förderleistung des Förderelements kommt es infolge des Entströmens der Menge an Flüssigkeit zu einem nur sehr geringen Druckabfall der Flüssigkeit in dem Druckspeichervolumen. Im Rahmen der praktischen Anwendung kann in guter Näherung von einem zeitlich konstanten Vordruck in dem Druckspeichervolumen ausgegangen werden. Wird die Verschließvorrichtung in kurzen Zeitabständen zueinander mehrfach geöffnet, so wird trotz der wiederholten Flüssigkeitsabgabe mit einer äußerst geringen Schwankungsbreite jeweils eine gleiche Menge an Flüssigkeit abgegeben. Die Vorrichtung zur Regulierung des Druckes der Flüssigkeit sorgt hierbei dafür, dass der Vordruck auch nach oben begrenzt ist und demgemäß auch keine zu große Menge an Flüssigkeit abgeführt wird. Im Gegensatz zu vielen aus dem Stand der Technik bekannten Dispensiervorrichtungen kann das Förderelement der Dispensiervorrichtung kontinuierlich mit einer zeitlich konstanten Fördermenge betrieben werden. Nichtlineare Fördermengenverläufe, insbesondere während des Hochfahrens oder Abstellens des Förderelements, werden während des Dispensiervorgangs somit vermieden.

Bevorzugt ist an dem dem Vorratselement zugewandten Ende der zweiten Leitung eine Aspiriernadel angeordnet. Die Aspiriernadel ist hierbei zweckmäßig mit der zweiten Leitung lösbar verbunden und kann insofern bei Bedarf ausgetauscht werden. Um die Eintauchtiefe der Aspiriernadel in die in dem Vorratselement befindliche Flüssigkeit zu regulieren, ist zweckmäßig an dem dem Vorratselement zugewandten Ende der zweiten Leitung und/oder der Aspiriernadel ein Flüssigkeitssensor zum Bestimmen und Regulieren der Eintauchtiefe in die Flüssigkeit des Vorratselements angeordnet. Somit kann die Position der Aspiriernadel bei abnehmendem Füllstand in dem Vorratselement vollautomatisch nachreguliert werden. Das Erreichen einer maximalen Eintauchtiefe der Aspiriernadel in das Vorratselement kann als Steuersignal verwendet werden, um einen vorzugsweise vollautomatisch ablaufenden Tausch des Vorratselements zu starten oder um zumindest ein Warnsignal auszugeben, das einen Bediener auf den erforderlichen Tausch des Vorratselements hinweist. Vorzugsweise kann das dem Vorratselement zugewandte Ende der zweiten Leitung und/oder die Aspiriernadel in Richtung des Eintauchens in die Flüssigkeit des Vorratselements verfahren werden. Um eventuell nebeneinander angeordnete Vorratselemente anfahren zu können oder die Aspiriernadel auch in eine Ruheposition oder eine Wechselposition verfahren zu können, ist es jedoch oftmals auch zweckmäßig, eine Verfahrbarkeit des dem Vorratselements zugewandten Endes der zweiten Leitung und/oder der Aspiriernadel transversal zur Eintauchtiefe in die Flüssigkeit des Vorratselements vorzusehen.

Zweckmäßig ist an dem zweiten, dem Förderelement abgewandten Leitungsende der ersten Leitung ein Dispensierelement mit zumindest einer Einlassöffnung und zumindest einer Auslassöffnung angeordnet. Ferner sind am Austritt der ersten Leitung und/oder des Dispensierelementes vorzugsweise ein oder mehrere Auffangbehälter angeordnet, in die die Flüssigkeit abgegeben wird. Mittels des Dispensierelementes kann die zu dispensierende Flüssigkeit sehr genau dem jeweiligen Auffangbehälter zugeführt werden. Um ein Nachtropfen der Flüssigkeit aus der ersten Leitung und/oder dem Dispensierelement zu verhindern, ist das Dispensierelement austrittsseitig vorzugsweise mit einer scharfkantigen Abrisskante ausgestattet. Eine zweckmäßig möglichst glatte Oberfläche der in dem Dispensierelement verlaufenden Leitung verhindert zudem ein Anlagern von Flüssigkeit in dem Dispensierelement. Anlagerungen in dem Dispensierelement würden bei nachfolgenden Dispensiervorgängen zu Verschmutzungseffekten bzw. zu einer Schwankung der Flüssigkeitsmenge führen.

Das Dispensierelement ist zweckmäßig als Dispensierkopf ausgebildet, der vorzugsweise horizontal und/oder in seiner Höhenposition und/oder um eine Drehachse automatisiert verfahrbar ist. Die Steuerung der Verfahrbewegung erfolgt bevorzugt mittels eines elektronischen Steuerungssystems, in dem zweckmäßig ein programmierbarer Mikroprozessor enthalten ist. Aufgrund der Verfahrbarkeit des Dispensierkopfes ist es möglich, den Dispensierkopf in eine optimale Position relativ zu dem Auffangbehälter zu verfahren und nach dem Dispensiervorgang wieder aus dieser Position heraus. Zweckmäßig kann das Dispensierelement automatisiert, vorzugsweise mittels eines Greifers, ausgetauscht werden, so dass in Abhängigkeit der Anwendung unterschiedliche Dispensierköpfe eingesetzt werden können.

Vorzugsweise ist die Förderrichtung des Förderelements umkehrbar. Somit kann nicht nur Flüssigkeit aus dem Vorratselement in die erste Leitung gefördert und vorzugsweise mittels des Dispensierelementes dispensiert werden, sondern auch in umgekehrter Förderrichtung Flüssigkeit aus einem Behälter, mit dem die erste Leitung vorzugsweise über das Dispensierelement kommuniziert, in Richtung des Vorratselements gefördert werden.

Bevorzugt wird der Öffnungs- und Schließzeitpunkt der Schnellschließvorrichtung von einer Steuervorrichtung, vorzugsweise einem Mikroprozessor, angesteuert. Mittels der Steuervorrichtung und insbesondere mittels eines programmierbaren Mikroprozessors ist über die Ausgabe von Steuersignalen an die Schnellschließvorrichtung eine hohe Reproduktionsgenauigkeit des Dispensiervorgangs realisierbar. Vorzugsweise werden in dem Mikroprozessor zusätzlich ein oder mehrere Eingangssignale, beispielsweise der Füllstand des Vorratselements, verarbeitet und zweckmäßig darüber hinaus weitere Stellglieder, beispielsweise Greifer zum Austausch von Vorratselementen, angesteuert.

Die erfindungsgemäße Aufgabe kann weiterhin durch ein Dispensierelement, insbesondere zur Verwendung in der beschriebenen Dispensiervorrichtung, gelöst werden, wobei das Dispensierelement eine Einlassöffnung und zumindest zwei Auslassöffnungen, einen ersten und einen zweiten Querkanal zur Verteilung der zu dispensierenden Flüssigkeit und zumindest zwei Versorgungskanäle zwischen dem ersten und dem zweiten Querkanal aufweist.

Die erfindungsgemäße Aufgabe kann weiterhin durch ein Dispensierelement, insbesondere zur Verwendung in der beschriebenen Dispensiervorrichtung, gelöst werden, wobei das Dispensierelement eine Einlassöffnung und zumindest zwei Auslassöffnungen, eine erste und eine zweite Druckstufe zur Druckangleichung innerhalb der jeweiligen Druckstufe und zumindest zwei Versorgungskanäle zwischen den beiden Druckstufen aufweist.

Insbesondere umfasst das Dispensierelement eine Einlassöffnung und zumindest zwei Auslassöffnungen, sowie einen ersten und einem zweiten Querkanal zur Verteilung der zu dispensierenden Flüssigkeit und zumindest zwei Versorgungskanälen zwischen dem ersten und zweiten Querkanal.

Durch die Bereitstellung von zwei Querkanälen wird erreicht, dass die zu dispensierende Flüssigkeit gleichmäßig aus den jeweiligen Auslassöffnungen austritt Es wird vermutet, ohne näher auf die physikalischen Grundlagen einzugehen, dass durch die Querkanäle zwei Druckstufen geschaffen werden, durch die der an den jeweiligen Auslassöffnungen anliegende Druck gleichmäßig verteilt wird. Mittels der Versorgungskanäle wird die Flüssigkeit von einer Druckstufe zur nächsten Druckstufe transportiert.

Bevorzugt weist ein Dispensierelement vier bzw. zwölf Auslassöffnungen auf. Besonders bevorzugt ist die Verwendung von acht Auslassöffnungen.

Bevorzugt sind die einzelnen Kanalabschnitte z.B. Einlasskanal, erster Querkanal, Versorgungskanäle, zweiter Querkanal, Auslasskanäle senkrecht zueinander angeordnet. Dies erleichtert den Fertigungsprozess des Dispenserelements und reduziert Unterschiede in der Volumenabgabe. Unbeschadet dessen kann die Erfindung auch mit leicht schräg verlaufenden Kanälen ausgeführt werden.

Gemäß einer weiteren bevorzugten Ausgestaltung verlaufen die beiden Querkanäle auf gleicher Höhe im Dispensierelement. Dies reduziert den Einfluss des Gefälles und des natürlichen Bestrebens der Flüssigkeit bei ungehemmtem Fluss den kürzesten vertikalen Weg zu nehmen. In diesem Fall würden die in unmittelbarer Umgebung der Einlassöffnung liegenden Auslasskanäle tendenziell größere Flüssigkeitsvolumen fördern.

In einer weiteren bevorzugten Alternative verläuft der erste Querkanal unterhalb des zweiten Querkanals. Die Flüssigkeit wird somit gezwungen entgegen dem Gefälle, von dem ersten Querkanal ausgehend, durch die Versorgungskanäle in den zweiten Querkanal aufzusteigen. Die durch den Einlasskanal in den ersten Querkanal kommende Flüssigkeit wird somit zunächst gleichmäßig im ersten Querkanal verteilt und füllt diesen auf, bevor sie durch die Versorgungskanäle gleichmäßig nach oben steigt und den zweiten Querkanal auffüllt. Dadurch wird eine gleichmäßige Druckverteilung im zweiten Querkanal erzielt.

Zur Befüllung des zweiten Querkanals werden bei dort abgehenden 2N Auslasskanälen bevorzugt N Versorgungskanäle verwendet. Dies sorgt für einen ausreichenden Flüssigkeitsstrom bei gleichmäßiger Druckverteilung. Besonders bevorzugt mündet im Abstand von zwei Auslasskanälen ein Versorgungskanal in den zweiten Querkanal. Zweckmäßig werden die Kanäle symmetrisch angeordnet. Dies wird dadurch erreicht, dass jeweils ein Auslasskanal außerhalb der am weitesten außen liegenden Versorgungskanäle angeordnet ist. Andere Anordnungen der Versorgungskanäle zu den Auslass bzw. Zahlenverhältnisse zwischen den Versorgungs- und Auslasskanälen sind auch im Rahmen der Erfindung. So ist zum Beispiel bei einem Dispensierelement mit einem Einlasskanal und zwei Auslasskanälen es von Vorteil, zwei Versorgungskanäle zwischen den ersten und zweiten Querkanal zu legen. In dieser Anordnung ist die Anzahl der Versorgungskanäle gleich der Anzahl der Auslasskanäle.

In einer bevorzugten Ausführungsform sind im Dispenserelement zwei Spülkanäle vorgesehen, die zweckmäßig außerhalb der äußersten Auslasskanäle die beiden Querkanäle miteinander verbinden. Durch die Spülkanäle wird die Blasenbildung bzw. die Bildung von Toträumen an den beiden Enden des ersten Querkanals verhindert und somit die beiden äußersten Auslasskanäle mit der selben Flüssigkeitsmenge versorgt. Bevorzugt sind die Durchmesser der Spülkanäle kleiner als die Durchmesser der Versorgungskanäle, um einen größeren Flüssigkeitsdurchsatz durch die äußeren Auslasskanäle im Verhältnis zu den innen gelegenen Auslasskanälen zu vermeiden. Des Weiteren ist es von Vorteil die Durchmesser der Querkanäle größer zu gestalten als die Durchmesser der Versorgungskanäle.

In einer weiteren vorteilhaften Ausgestaltung weist das Dispensierelement mehr als zwei Druckstufen bzw. Querkanäle auf. Insbesondere bei einer größeren Anzahl von Auslasskanälen z.B. bei mehr als acht Auslasskanälen kann so für eine gleichmäßigere Flüssigkeits- bzw. Druckverteilung an den Auslasskanälen gesorgt werden. Nachteilig ist dabei, dass die insgesamt sich in den Kanälen befindliche Flüssigkeitsmenge erhöht wird, was zu größeren Abfallmengen bei einem Wechsel der zu dispensierenden Flüssigkeit führt.

In einem weiteren Aspekt wird ein Dispensierelement insbesondere zur Verwendung in der oben beschriebenen Dispensiervorrichtung zur Verfügung gestellt. Das Dispensierelement weist eine Einlassöffnung sowie acht Auslassöffnungen auf, wobei die Einlassöffnung mittels in dem Dispensierelement verlaufender Kanäle mit den Auslassöffnungen verbunden ist und der Strömungswiderstand längs der Kanäle zwischen der Einlassöffnung und einer jeden der acht Auslassöffnungen gleich groß ist. Somit ist sichergestellt dass Flüssigkeit, die durch die Einlassöffnung in das Dispensierelement eintritt, sich zu gleichen Teilen zu den Auslassöffnungen hin verteilt. An jeder der acht Auslassöffnungen tritt infolge dessen jeweils ein Achtel der durch die Einlassöffnung zugeführten Flüssigkeitsmenge aus dem Dispensierelement aus. Auf diese Weise lässt sich eine effiziente und anteilsgleiche Verteilung einer Flüssigkeitsmenge auf die acht Auslassöffnungen erzielen. Im Zusammenwirken mit der oben beschriebenen, erfindungsgemäßen Dispensiervorrichtung kann somit mittels eines Öffnungszyklus der Verschließ Vorrichtung eine Zumessung von acht, jeweils gleichen Flüssigkeitsmengen auf zweckmäßig acht Auffangbehälter erfolgen. Bevorzugt sind die acht Auffangbehälter hierzu nebeneinander angeordnet.

Die Kanalführung von der Einlassöffnung zu den Auslassöffnungen erfolgt in einer bevorzugten Ausführungsform des erfindungsgemäßen Dispensierelementes so, dass ein erster Kanal, der mit der Einlassöffnung in dem Dispensierelement verbunden ist, sich zunächst in vier zweite Kanäle verzweigt, die sich wiederum jeweils in je zwei dritte Kanäle verzweigen. Jeder der dritten Kanäle ist hierbei mit je einer Auslassöffnung verbunden. Ferner kommunizieren die Verzweigungspunkte der Kanäle in der jeweiligen Verzweigungsebene jeweils miteinander. Infolgedessen kann in jeder Verzweigungsebene ein Druckausgleich erfolgen, so dass eventuell auftretende Strömungsinhomogenitäten innerhalb der Kanalführung ausgeglichen werden.

Es hat sich gezeigt das die Unterschiede zwischen den über die einzelnen Auslassöffnungen abgegebenen Flüssigkeitsvolumen durch größere Druckstufen bzw. Querkanäle reduziert werden können. Die höhere Genauigkeit geht einher mit einem größerem im Dispenserelement sich befindlichen Gesamtvolumen der Flüssigkeit, welches bei anderen Verfahrensschritten die einem Wechsel der Flüssigkeit bedingen vorher entsorgt werden muss. Bei häufigen Flüssigkeitswechseln wird durch die großen Abfallmengen ein früherer Austausch der Vorratsbehälter notwendig. Gerade bei Apparaturen in denen die Vorratsbehältnisse von Hand gewechselt werden, ist eine ständige Überwachung der Füllmenge notwendig. Es ist somit erstrebenswert, die Abfallmengen gering zu halten. Bei Auslegung des Dispenserelements wird ein Kompromiss zwischen hoher Abgabegenauigkeit und geringem durch die Kanäle vorgegebenem Gesamtvolumen zur Aufnahme von Flüssigkeit angestrebt. In Abhängigkeit der Anzahl der zu versorgenden Auslasskanäle wird die beste Auslegung des Dispenserkopfes empirisch ermittelt. Dies bezieht sich sowohl auf die Größenverhältnisse der einzelnen Kanäle als auch auf deren Anzahl.

Bevorzugt sind die einzelnen Kanäle rund. Andere Formen sich jedoch auch denkbar wie z.B. rechteckig oder oval.

Bei Umkehr der Förderrichtung kann das beschriebene Dispensierelement bevorzugt als Aspiriertool eingesetzt werden. Es ist geeignet genau definierte Flüssigkeitsmengen aus einzelnen Flüssigkeitsbehältern zu entnehmen.

Erfindungsgemäß wird ein Verfahren zum weitgehend automatisierten, feindosierten Dispensieren von Flüssigkeiten, bevorzugt von Reagenzien bereitgestellt. Das Verfahren umfasst hierbei folgende Arbeitsschritte:
Ansaugen der Flüssigkeit aus einem Vorratselement in ein Leitungssystem,
Aufbau eines zeitlich weitgehend konstanten Druckes der Flüssigkeit in zumindest einem Abschnitt des Leitungssystems,
Dosieren der zu dispensierenden Flüssigkeitsmenge durch kurzzeitiges Öffnen einer in dem Leitungssystem angeordneten Schnellschließvorrichtung, so dass eine der Öffnungsdauer der Schnellschließvorrichtung und dem Flüssigkeitsdruck entsprechende Flüssigkeitsmenge aus dem Abschnitt des Leitungssystems dispensiert wird.
Vorzugsweise wird das Verfahren mittels der erfindungsgemäßen Vorrichtung zum Dispensieren von Flüssigkeiten durchgeführt.

Erfindungsgemäß wird vor dem Verfahrensschritt des Ansaugens der Flüssigkeit aus einem Vorratselement das eine Ende des Leitungssystems automatisiert horizontal und/oder vertikal und/oder durch eine Drehbewegung so verfahren, dass das Leitungssystem mit einem ausgewählten Vorratsbehälter kommuniziert.

Der Verfahrensschritt des Dosierens der zu dispensierenden Flüssigkeit kann mehrfach hintereinander wiederholt werden. Vor jedem neuen Dosiervorgang wird das andere Ende des Leitungssystems automatisiert horizontal und/oder vertikal und/oder durch eine Drehbewegung zweckmäßig so verfahren, dass die dosierte Flüssigkeitsmenge in einen oder mehrere ausgewählte Behälter abgegeben wird. Die Behälter, in die die dosierte Flüssigkeit abgegeben wird, werden bevorzugt vor jedem neuen Dosiervorgang horizontal und/oder vertikal und/oder durch eine Drehbewegung gesteuert verfahren, so dass die jeweiligen Behälter in einer für den Dosiervorgang geeigneten Position angeordnet sind.

Zum Aufbau des zeitlich konstanten Druckes wird die Flüssigkeit vorzugsweise kontinuierlich bevorzugt mittels einer Pumpe gefordert. Der Druck kann pumpenaustrittsseitig durch ein druckgesteuertes Rückführen der Flüssigkeit begrenzt werden. Vorzugsweise wird bei Überschreiten eines Maximaldruckes im Leitungssystem die Flüssigkeit in das Vorratselement zurückgeführt. Alternativ kann bei Überschreiten eines Maximaldruckes im Leitungssystem die Flüssigkeit aber auch in einen vor der Pumpe gelegenen Bereich des Leitungssystems zurückgeführt werden.

Nach Beenden des Dispensierens der Flüssigkeit wird das Leitungssystem zweckmäßig mit einer Waschflüssigkeit gewaschen. Hierdurch wird verhindert, dass in dem Leitungssystem Rückstände eines vorherigen Dispensiervorganges verbleiben, die nachfolgend zu Verunreinigungen führen würden.

Die Erfindung bezieht sich auch auf Verfahren, die auf oder mit den offenbarten Vorrichtungen durchgeführt werden können. Sie enthält Verfahrensschritte zur Ausüben jeder Funktion der Vorrichtungen. Des Weiteren bezieht sich die Erfindung auch auf Vorrichtungen zur Durchführung der offenbarten Verfahren, sowie auf Vorrichtungsmerkmale zur Durchführung der beschriebenen Verfahrensschritte. Diese Verfahrensschritte können mittels Hardwarekomponenten durchgeführt werden, mittels Computern mit entsprechenden Softwareprogrammen, durch Kombinationen davon oder auf andere Art und Weise.

### Kurze Beschreibung der Zeichnungen

Einige der obig angedeuteten und andere detaillierte Aspekte der Erfindung sind in der folgenden Beschreibung näher erläutert und sind teilweise anhand der beigefügten Zeichnungen illustriert.

Insbesondere zeigen:
- Fig. 1: eine erste erfindungsgemäß ausgeführte Dispensiervorrichtung in einer schematischen Darstellung;
- Fig. 2: eine zweite erfindungsgemäß ausgeführte Dispensiervorrichtung in einer schematischen Darstellung;
- Fig. 3: eine dritte erfindungsgemäß ausgeführte Dispensiervorrichtung in einer schematischen Darstellung;
- Fig. 3a: eine bevorzugte Ausgestaltung der erfindungsgemäßen Dispensiervorrichtung nach Figur 3;
- Fig. 4: eine vierte erfindungsgemäß ausgeführte Dispensiervorrichtung in einer schematischen Darstellung;
- Fig. 5: einen Längsschnitt durch einen erfindungsgemäß ausgeführter Dispensierkopf mit einer Einlaßöffnung und zwei Auslaßöffnungen;
- Fig. 6a: einen Querschnitt durch einen erfindungsgemäß ausgeführten Dispenserkopf mit zwei Querkanälen auf einer Höhe;
- Fig. 6b: einen Querschnitt durch einen erfindungsgemäß ausgeführten Dispenserkopf mit einem ersten Querkanal unterhalb eines zweiten Querkanals;
- Fig. 7: einen Längsschnitt durch einen erfindungsgemäß ausgeführter Dispensierkopf mit einer Einlaßöffnung und acht Auslaßöffnungen;
- Fig. 8: einen Längsschnitt durch einen erfindungsgemäß ausgeführter Dispensierkopf mit einer Einlaßöffnung und acht Auslaßöffnungen gemäß Fig. 7, sowie zwei Spülkanälen;
- Fig. 9: einen Längsschnitt durch einen erfindungsgemäß ausgeführter Dispensierkopf mit einer Einlaßöffnung und vier Auslaßöffnungen;
- Fig. 10: einen Längsschnitt durch einen erfindungsgemäß ausgeführter Dispensierkopf mit einer Einlaßöffnung und zwölf Auslaßöffnungen;
- Fig. 11: einen Längsschnitt durch einen erfindungsgemäß ausgeführter Dispensierkopf mit einer Einlaßöffnung und zwölf Auslaßöffnungen, sowie mit drei Querkanälen;
- Fig. 12: einen vertikalen Querschnitt durch einen erfindungsgemäß ausgeführter Dispensierkopf mit drei Querkanälen.
- Fig. 12b: einen vertikalen Querschnitt durch einen erfindungsgemäß ausgeführter Dispensierkopf mit drei horizontal angeordneten Querkanälen.
- Fig. 12c: einen vertikalen Querschnitt durch einen erfindungsgemäß ausgeführter Dispensierkopf mit drei steigend angeordneten Querkanälen.

### Wege zur Ausführung der Erfindung

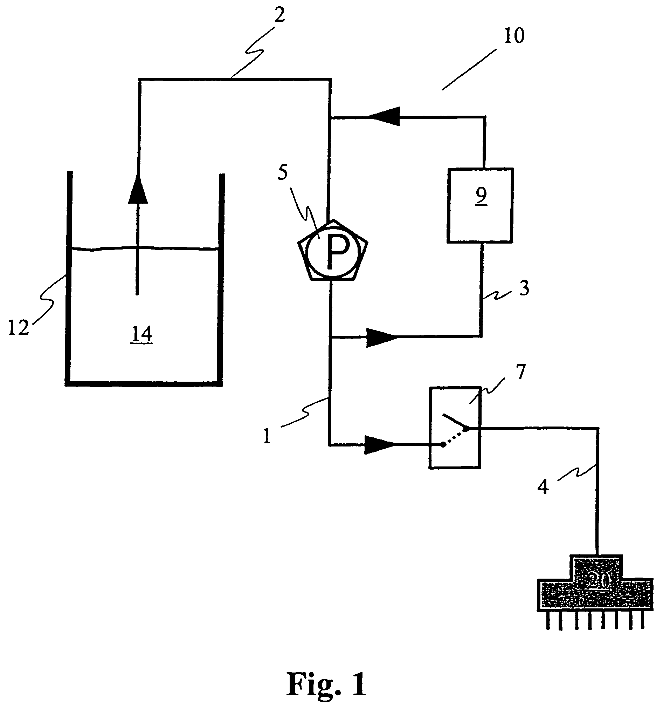

Die in Figur 1 dargestellte Anordnung zeigt in einer schematischen Darstellung eine erste erfindungsgemäß ausgeführte Dispensiervorrichtung 10. Die hier dargestellte Dispensiervorrichtung umfaßt im Wesentlichen eine erste Leitung 1, eine Membranpumpe 5, ein Magnetventil 7 sowie eine dritte Leitung 3 mit einem in dieser dritten Leitung integrierten Druckhalteventil 9. Die erste Leitung ist als Verbindungselement zwischen der Membranpumpe 5 und dem Magnetventil 7 angeordnet. Darüber hinaus ist die Membranpumpe 5 auf ihrer Eingangsseite mittels einer zweiten Leitung 2 mit einem Vorratselement 12, hier einer Pufferflasche, verbunden. In der Pufferflasche befindet sich eine zu dispensierende Flüssigkeit 14. Ferner ist das Magnetventil mittels einer vierten Leitung 4 mit einem Dispensierkopf 20, hier einem 8-Kanal-Dispensierkopf, verbunden. Die dritte Leitung 3 zweigt hier in Form einer Rückführungsleitung von der ersten Leitung 1 ab und mündet vor der Membranpumpe 5 in die zweite Leitung 2. Das Druckhalteventil 9 kann in einfacher Weise als Überdruckventil ausgeführt sein und kann vorzugsweise bei Überschreiten eines Druckgrenzwertes in Strömungsrichtung von der ersten Leitung 1 zur zweiten Leitung 2 durchlässig geschaltet werden. Die Rückführungsschleife umfassend die dritte Leitung 3 sowie das Druckhalteventil 9 dient hier als Vorrichtung zur Regulierung des Druckes der Flüssigkeit in der ersten Leitung 1.

Mit Pfeilen in Figur 1 dargestellt ist die Strömungsrichtung der zu dispensierenden Flüssigkeit innerhalb der Dispensiervorrichtung 10. Die Membranpumpe 5 saugt kontinuierlich Flüssigkeit 14 aus der Pufferflasche 12 durch die zweite Leitung 2 und fordert diese in die erste Leitung 1. Ist das Magnetventil 7, das hier als 2/2-WegeMagnetventil ausgeführt ist, geschlossen, so kommt es zu einem Aufstau und aufgrund des kontinuierlichen Förderns der Membranpumpe 5 zu einem Druckanstieg der geförderten Flüssigkeit in der ersten Leitung 1. Bei einem als Überdruckventil ausgeführten Druckhalteventil 9 öffnet das Überdruckventil im Falle des Erreichens eines Grenzdruckwertes. In einer bevorzugten Ausführungsform des Überdruckventils kann der Grenzdruckwert innerhalb eines interessierenden Druckbereichs manuell oder rechnergesteuert frei gewählt und eingestellt werden. Öffnet das Überdruckventil 9, so strömt Flüssigkeit aus der ersten Leitung 1 über die dritte Leitung 3 wieder zurück in die zweite Leitung und rezirkuliert somit. Die in Figur 1 dargestellte Anordnung ist eine besonders bevorzugte Ausführungsform der Erfindung.

Der Strömungswiderstand für die Durchströmung der dritten Leitung muß hierbei so gewählt werden, daß sich bei kontinuierlicher Förderung und geöffnetem Druckhalteventil 9 in der ersten Leitung 1 ein zeitlich konstanter Flüssigkeitsdruck einstellt. Dies kann entweder durch geeignete Wahl der Strömungsquerschnitte der dritten Leitung 3 oder mittels eines geeignet gewählten, d.h. nicht zu groß gewählten, Öffnungsquerschnitt des Druckhalteventils 9 oder eine zusätzliche Drossel erzielt werden. Somit befindet sich in der ersten Leitung eine Flüssigkeitsmenge mit einem wohldefinierten und zeitlich konstanten Druck. Wird nun das 2/2-Wege-Magnetventil 7 durchgeschaltet, so strömt Flüssigkeit aus der ersten Leitung 1 in die vierte Leitung 4 und von hier in den Dispensierkopf 20. In dem Dispensierkopf 20 wird der ankommende Flüssigkeitsstrom zu acht gleichen Teilen aufgeteilt und den acht Auslaßöffnungen 24 zugeführt. Die Flüssigkeit entströmt schließlich über die acht Auslaßöffnungen 24 und über an den Auslaßöffnungen angebrachte Aspiriernadeln der Dispensiervorrichtung 10.

Zweckmäßig, in Figur 1 jedoch nicht dargestellt, sind am Austritt der Aspiriemadeln Auffangbehälter, beispielsweise eine Microtiter-Platte, angeordnet, in die die Flüssigkeit abgegeben wird und die vorzugsweise automatisiert ausgetauscht werden können. Die Öffnungsdauer des 2/2-Wege-Magnetventils 7 wird in Abhängigkeit der jeweils gewünschten zu dispensierenden Flüssigkeitsmenge gewählt. Ebenso läßt sich aber auch mittels eines höheren oder niederen Druckes der Flüssigkeit in der ersten Leitung 1 bei gleicher Öffnungsdauer der Verschließvorrichtung eine Veränderung des Flüssigkeitsdurchsatzes erzielen. Während der Öffnungsdauer des Magnetventils schließt vorzugsweise das Druckhalteventil 9, so daß es zu keiner Rezirkulation von Flüssigkeit mehr kommt. Insbesondere das Volumen der ersten Leitung sowie die Förderleistung der Membranpumpe 5 ist im Verhältnis zu der jeweils abzugebenden Flüssigkeitsmenge so zu wählen, daß es im Falle des Öffnens des Magnetventils 7 zu keinem nennenswerten Druckabfall der Flüssigkeit in der ersten Leitung 1 kommt. Dies ist bei ausreichend großem Speichervolumen der ersten Leitung 1 im Verhältnis zu der jeweils abgegebenen Flüssigkeitsmenge gegeben.

Somit ist es möglich, mit einer sehr geringen Schwankungsbreite gleiche Flüssigkeitsmengen in sehr kurzen Zeitabständen versetzt zueinander zu dispensieren. Mit der zusätzlich in dem Dispensierkopf 20 stattfindenden Aufteilung der jeweils abgegebenen Flüssigkeitsmenge in acht gleiche Teile kann somit in einem Dispensiervorgang Flüssigkeit an acht Auffangbehälter abgegeben werden. Dies bedeutet im Vergleich zu aus dem Stand der Technik bekannten Systemen und Vorrichtungen eine erhebliche Beschleunigung des Dispensiervorgangs. Überdies kann der Dispensiervorgang in einfacher Weise mittels einer Prozeßsteuerung automatisiert werden, da alle erforderlichen Schalt- und Förderelemente (Magnetventil, Druckhalteventil und Pumpe) elektrisch ansteuerbar sind oder in dem Systemverbund ohnehin ohne äußere Steuersignalvorgabe arbeiten.

Vorzugsweise ist die in Fig. 1 dargestellte Dispensiervorrichtung 10 in einer Befüllvorrichtung angeordnet. Das Dispensieren von Flüssigkeiten aus einem oder mehreren Vorratsbehältern 12 in eine oder mehrere Auffangbehälter erfolgt zweckmäßig automatisiert, wobei neben den oben beschriebenen Arbeitsschritten weitere Arbeitsschritte teil- oder vollautomatisiert ablaufen. So ist der Dispensierkopf 20 vorzugsweise zu Beginn eines Dispensiervorgangs in einer Park-/Waschposition angeordnet. In einem weiteren Arbeitsschritt wird, sofern mehrere mit zu dispensierender Flüssigkeit befüllte Vorratsbehälter zur Auswahl stehen, ein Vorratsbehälter ausgewählt und das eine Ende der zweiten Leitung und/oder eine dem Ende der zweiten Leitung angebrachte Aspiriernadel so verfahren und positioniert, daß das eine Ende der zweiten Leitung und/oder die Aspiriernadel in die Flüssigkeit eintaucht.

Im Falle eines austauschbaren Dispensierkopfes, ist ein für den Dispensiervorgang geeigneter Dispensierkopf 20 auszuwählen und mittels einer Leitung mit dem Magnetventil zu verbinden. Unterschiede der Dispensierköpfe 20 können in der Anzahl der Auslaßöffnungen oder auch im Durchmesser der Auslaßöffnungen oder auch der in dem Dispensierkopf verlaufenden Kanäle vorliegen. Der Dispensierkopf 20 ist des Weiteren, sofern erverfahrbar ausgeführt ist, so zu positionieren, daß er ein Dispensieren in die hierfür vorgesehenen Auffangbehälter ermöglicht. Der Dispenserkopf kann durch den Greifer eines Roboters aufgenommen werden, um ihn zu positionieren. Alternativ oder auch ergänzend ist es jedoch auch möglich, die Auffangbehälter in eine für den Dispensiervorgang geeignete Position zu bringen.

Anschließend wird die die Flüssigkeit fördernde Pumpe gestartet, wobei sich das Magnetventil in seiner Schließposition befinden sollte. Hieran schließt sich ein einmaliger oder ein sich vorzugsweise wiederholender Dispensiervorgang, wie er bereits oben beschrieben wurde, an. Um eine Vielzahl von Auffangbehältern, beispielsweise Microtiter-Platten, zu befüllen, sind die Auffangbehälter hierbei vorzugsweise in einer Matrix angeordnet, wobei vorzugsweise die Auffangbehälter jeweils einer Reihe dieser Matrix gleichzeitig befüllt werden. Zwischen jedem Dispensiervorgang wird entweder der Dispensierkopf 20 so verfahren, daß jeweils eine neue Reihe der Auffangbehälter befüllt werden kann, oder die Reihen der Auffangbehälter werden unter dem Dispensierkopf 20 so verfahren, daß bei jedem Dispensiervorgang eine neue Reihe unterhalb des Dispensierkopfes angeordnet ist. Nach Beendigung des Dispensiervorgangs verfährt der Dispensierkopf 20 zweckmäßig wieder in seine Park-/Waschposition.

Abschließend wird das Leitungssystem und der Dispensiervorgang zweckmäßig gewaschen, um zu verhindern, das Reste eines vorhergehenden Dispensiervorgangs in dem Leitungssystem verbleiben. Ein Waschvorgang erfolgt hierbei grundsätzlich in gleicher Weise wie ein Dispensionsvorgang, wobei für den Waschvorgang eine Waschflüssigkeit, beispielsweise deionisiertes Wasser, verwendet wird. Damit neben dem Hauptleitungssystem auch die dritte Leitung gereinigt wird, wird zweckmäßig das Magnetventil mehrfach während des Waschvorgangs geschlossen. Die aus dem Dispensierkopf austretende Waschflüssigkeit wird von der Park-/Waschstation aufgefangen und vorzugsweise über einen Schlauch in eine Waste-Flasche abgeführt.

Die in Figur 1 gezeigte Ausführungsform ist besonders bevorzugt. Sie erleichtert das Spülen bei Flüssigkeitswechsel und kommt mit kleinem Spülvolumen aus.

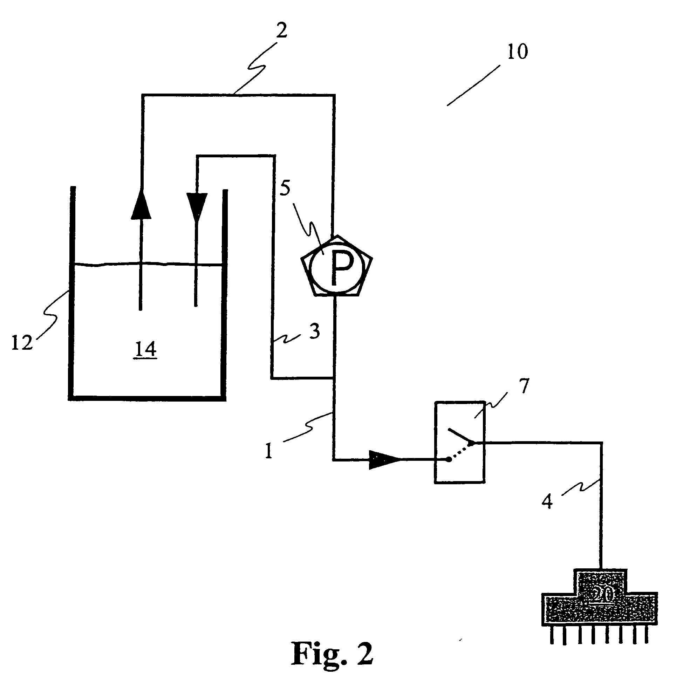

In Figur 2 ist eine zweite erfindungsgemäß ausgeführte Dispensiervorrichtung 10 dargestellt. Der Aufbau unterscheidet sich im Vergleich zu der Dispensiervorrichtung gemäß Figur 1 insbesondere in der Ausführung der Vorrichtung zur Regulierung des Druckes der Flüssigkeit in dem Bereich zwischen der Membranpumpe und dem Magnetventil. Die Vorrichtung zur Regulierung des Druckes der Flüssigkeit in der ersten Leitung 1 umfaßt hier lediglich eine dritte Leitung 3, die von der ersten Leitung abzweigt und in das Vorratselement 12 einmündet. Bei dieser im Aufbau einfachen Vorrichtung ist es erforderlich, die Förderleistung der Membranpumpe und den Strömungsquerschnitt der dritten Leitung so aufeinander abzustimmen, daß in der ersten Leitung ein weitgehend konstanter Druck anliegt. Vorteilhaft ist hierzu die erste Leitung mit einem großen Volumen auszuführen.

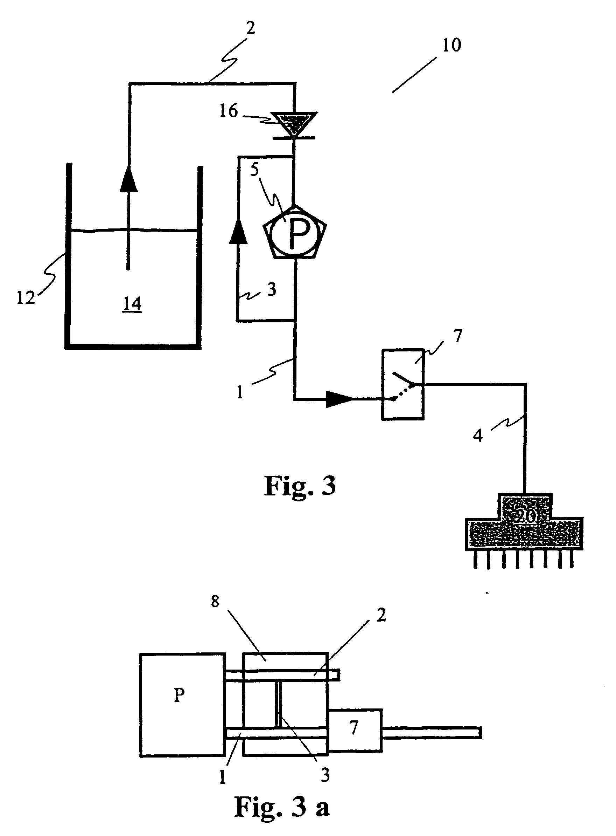

Eine dritte erfindungsgemäß ausgeführte Dispensiervorrichtung ist in Figur 3 dargestellt. Die Vorrichtung zur Regulierung des Druckes der Flüssigkeit in der ersten Leitung 1 umfaßt hier eine dritte Leitung 3 und ein Rückschlagventil 16, wobei die dritte Leitung 3 von der ersten Leitung 1 abzweigt und in die zweite Leitung 2 einmündet, und ferner das Rückschlagventil 16 in einem Bereich zwischen dem ersten, dem Vorratselement 12 zugewandten Ende der zweiten Leitung und der Einmündung der dritten Leitung in die zweite Leitung als zwischengeschaltetes Element in der zweiten Leitung angeordnet ist.

Hierbei kommt es, zumindest sofern die Verschließvorrichtung verschlossen ist, zu einer Rezirkulation eines Teiles oder der gesamten von dem Förderelement geförderten Flüssigkeitsmenge, wobei die über die dritte Leitung rezirkulierende Flüssigkeit aus der ersten Leitung wieder in die zweite Leitung gelangt. Das Rückschlagventil 16 verhindert ein Rückströmen der rezirkulierenden Flüssigkeit in das Vorratselement 12. Aufgrund des in sich geschlossenen Rezirkulationskreislaufs kann es jedoch bei hoher Förderleistung und kleinem Rezirkulationsvolumen zu einer gewissen Erwärmung der rezirkulierenden Flüssigkeit kommen. Das Rückschlagventil selbst ist optional, aber vorteilhaft. Auch ohne Rückschlagventil werden zufriedenstellende Resultate erzielt, jedoch kann durch Verwendung eines Rückschlagventils die Zahl der Luftblasen in der Leitung gesenkt werden. Dies führt zu einer größeren Genauigkeit.

Bevorzugt ist, wie in Figur 3a gezeigt, der Leitungsloop 3 in einem festen Block 8 integriert. Dieser ist besonders bevorzugt in unmittelbarer Nähe zu oder direkt mit der Membranpumpe verbunden. Die Verschließvorrichtung 7 (z.B. ein Magnetventil) ist zweckmäßig direkt an Loopblock 8 angeschlossen. Bevorzugt kann der Loopblock und die Schließvorrichtung zu einem Ventilblock zusammengefaßt werden (nicht gezeigt). Leitung 3 verbindet innerhalb des Loopblocks als Querkanal Leitung 1 mit Leitung 2. Das optionale, aber vorteilhafte Rückschlagventil ist zweckmäßig im Eingangsbereich der Leitung 2 in den Loopblock im Loopblock angeordnet.

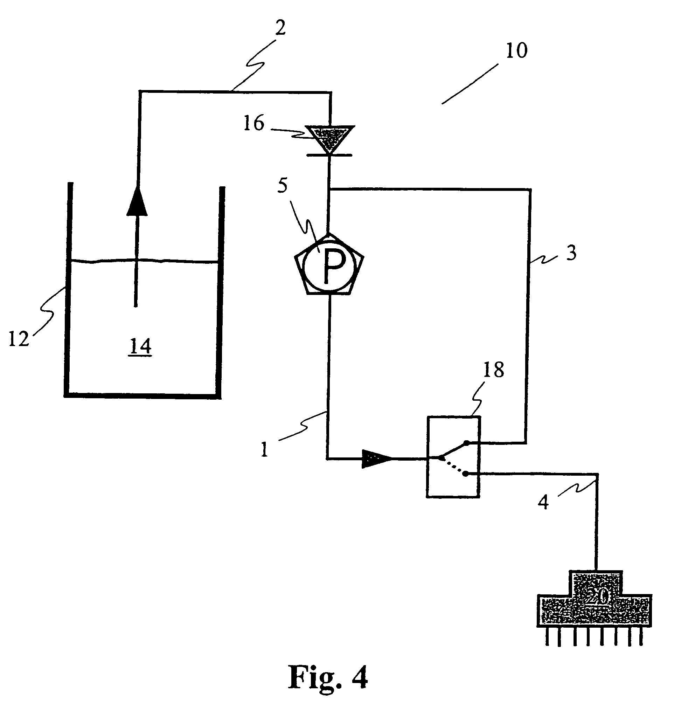

In einer weiteren bevorzugten Ausführungsform der Vorrichtung zur Regulierung des Druckes der Flüssigkeit in der ersten Leitung 1 ist das Magnetventil 18, wie in Figur 4 dargestellt, als ein 3/2-Wege-Magnetventil ausgeführt und die Vorrichtung zur Regulierung des Druckes der Flüssigkeit in der ersten Leitung umfaßt ferner eine dritte Leitung 3 und ein Rückschlagventil 16, wobei die dritte Leitung eine der beiden Ausgänge des 3/2-Wege-Magnetventils mit der zweiten Leitung verbindet und ferner das Rückschlagventil in einem Bereich zwischen dem ersten Ende der zweiten Leitung und der Einmündung der dritten Leitung in die zweite Leitung als Zwischenelement in der zweiten Leitung angeordnet ist. Mittels des 3/2-Wege-Magnteventils kann die Flüssigkeit bei geschlossener Verschließvorrichtung in Warteposition in der ersten und dritten Leitung zirkulieren. Auch hier ist das Rückschlagventil optional, aber vorteilhaft. Selbst ohne Rückschlagventil werden zufriedenstellende Resultate erzielt, jedoch kann durch Verwendung eines Rückschlagventils die Zahl der Luftblasen in der Leitung gesenkt werden. Dies führt zu einer größeren Genauigkeit.

Bevorzugt bestehen die erste Leitung und/oder die zweite Leitung und/oder die dritte Leitung der Dispensiervorrichtung aus einem leicht verbiegbaren Kunststoff, wobei der Kunststoff eine Beständigkeit gegenüber der zu dispensierenden Flüssigkeit aufweist. Alternativ ist es auch zweckmäßig, Leitungen aus Silikon zu verwenden.

Die Dispensierpumpe als auch das Magnetventil sind bevorzugt mit 24 Volt Gleichstrom zu speisen. Hierdurch entsteht auch im Falle eines elektrischen Kurzschlusses keine Gefahr für einen mit der Vorrichtung in Kontakt kommenden Bediener.

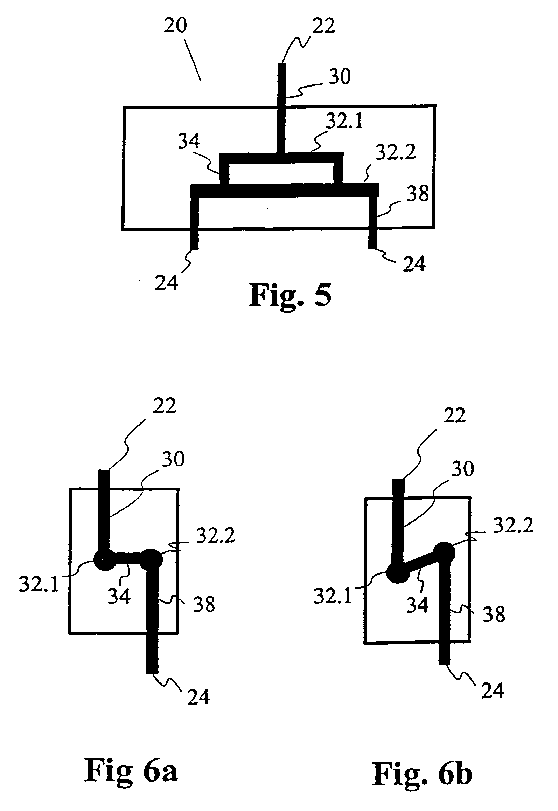

In Figur 5 ist ein erfindungsgemäß gestalteter Dispenserkopf 20 mit einer Einlaßöffnung 22 und zwei Auslaßöffnungen 24 gezeigt. Die zu dispensierende Flüssigkeit gelangt über die Einlaßöffnung 22 in den Einlaßkanal 30 des Dispenserkopfes 20. Am Ende des Einlaßkanals 30 mündet dieser in einer ersten Druckstufe, die als erster Querkanal 32.1 ausgebildet ist. In dieser Druckstufe wird die Flüssigkeit durch den ersten Querkanal 32.1 senkrecht zum Einlaßkanal verteilt. Der Querkanal 32.1 hat bevorzugt einen größeren Durchmesser als der in ihm mündende Einlaßkanal 30. Des weiteren ist der Durchmesser des ersten Querkanals 32.1 bevorzugt größer ausgebildet, als die Durchmesser der vom ersten Querkanal abgehenden Versorgungskanäle 34. Beide Aspekte tragen dazu bei, den ersten Querkanal 32.1 gleichmäßig und über dessen komplette Erstreckung mit zu dispensierender Flüssigkeit anzufüllen, bevor die Flüssigkeit weitergeleitet wird.

Zwei Versorgungskanäle 34, die jeweils an den beiden Enden des ersten Querkanals 32.1 angeordnet sind, leiten die Flüssigkeit anschließend in einen zweiten Querkanal 32.2. Die Versorgungskanäle 34 gehen in der gezeigten Ausführungsform bevorzugt senkrecht vom ersten Querkanal 32.1 ab und münden wiederum bevorzugt senkrecht in den zweiten Querkanal 32.2 ein. Durch die senkrechte Anordnung der Kanäle wird ein stufenweises Anfüllen der Kanäle erreicht; außerdem ist eine senkrechte Anordnung fertigungstechnisch leichter zu verwirklichen. Von der zweiten Druckstufe, die wiederum als Querkanal 32.2 ausgebildet ist, wird die Flüssigkeit in den Eingangsbereich der Auslaßkanäle 38 geleitet. In der gezeigten Ausführungsform sind die beiden Auslaßkanäle 38 jeweils an den entfernten Enden des zweiten Querkanals angeordnet. Da die Versorgungskanäle 34 weiter innen liegend in den zweiten Querkanal 32.1 münden, muß die Flüssigkeit in Richtung der äußeren Enden des zweiten Querkanals 32.1 wandern, um in den jeweiligen Auslaßkanal 34 zu gelangen. Der Durchmesser des zweiten Querkanals 32.2 ist wiederum bevorzugt größer gestaltet als der Durchmesser der Versorgungskanäle 34 und/oder der Auslaßkanäle 38. Die von den Versorgungskanälen 34 in den zweiten Querkanal 32.2 gelangende Flüssigkeit kann sich leicht in dieser Druckstufe ausbreiten bevor die jeweiligen Auslaßkanäle 38 mit der Flüssigkeit beschickt werden.

In der gezeigten Ausführungsform des Dispenserkopfes mit zwei Auslaßkanälen kann sich im Bereich des zweiten Querkanals 32.2, welcher zwischen den beiden Versorgungskanälen liegt, ein Abschnitt bilden, der nicht regelmäßig von Flüssigkeit durchspült wird. Die in diesem Abschnitt befindlichen Flüssigkeitsvolumina haben tendenziell eine längere Verweilzeit im Dispenserkopf 20. Unter Umständen kann dies dazu führen, daß trotz mehrerer sequentiell durchgeführter Dispensiervorgänge sich immer noch Restbestände der ursprünglich in diesem Abschnitt verweilenden Flüssigkeit dort befinden. Im ungünstigsten Fall können selbst bei einem Flüssigkeitswechsel oder einem Ausstoßen der zu dispensierenden Flüssigkeit mit einer Waschlösung Rückstände in diesem Abschnitt verbleiben, die dann sukzessive bei Dispensiervorgängen mit anderen Flüssigkeiten abgegeben werden und diese Verschmutzen. Dieses Problem kann durch ein nach Innen legen der Auslaßkanäle reduziert werden. In einer solchen bevorzugten Ausführungsform befinden sich die Auslaßkanäle 38 in dem zwischen den Versorgungskanälen 34 liegenden Abschnitt des zweiten Querkanals 32.2 (nicht gezeigt).

Am unteren Ende der Auslaßkanäle wird die zu dispensierende Flüssigkeit über die Auslaßöffnungen 24 abgegeben. Die Auslaßöffnungen können direkt mit der Unterseite des Dispenserkopfes abschließen (nicht gezeigt) oder mittels einer Fortführung des Auslaßkanals z.B. in Form eines Hohlzylinders oder einer Nadel aus dem Dispenserkopf 20 herausgeführt werden. In diesen bevorzugten Ausführungsformen wird das gezielte Abgeben der zu dispensierenden Flüssigkeit in Behälter erleichtert.

Figur 5 zeigt einen vertikalen Längsschnitt durch den Dispenserkopf 20. In der gezeigten Ausführungsform sind die beiden Querkanäle vertikal übereinander liegend angeordnet. Dies ist eine von mehreren möglichen Anordnungen, ohne das sie zwingend ist. Bevorzugt werden die beiden Druckstufen auf einer horizontalen Ebene angeordnet bzw. die erste Druckstufe unterhalb der zweiten Druckstufe angeordnet, um ein sukzessives Auffüllen der einzelnen Kanalstufen zu fördern.

Figur 6a zeigt einen vertikalen Querschnitt durch einen Dispenserkopf. In dieser Darstellung ist die Anzahl der Auslaßöffnungen nicht zu erkennen und für die folgende Betrachtung auch nicht erforderlich. In dem Dispenserkopf 20 wird die zu dispensierende Flüssigkeit durch die Einlaßöffnung 22 in den Einlaßkanal 30 eingespeist und vertikal nach unten geleitet. Dort gelangt sie in die erste Druckstufe, welche durch einen ersten Querkanal 32.1 gebildet wird, der im Verhältnis zum Einlaßkanal einen größeren Durchmesser aufweist. Von dem ersten Querkanal 32.1 gehen horizontal Versorgungskanäle ab. Diese haben wiederum einen kleineren Durchmesser als der erste Querkanal 32.1. Die über den Einlaßkanal 30 in den ersten Querkanal gelangte Flüssigkeit füllt diesen zumindest im unteren Bereich zunächst über seine komplette Längserstreckung mit Flüssigkeit an, bevor die Flüssigkeit in die einzelnen Versorgungskanäle eindringt. So entsteht über die gesamte Druckstufe des ersten Querkanals eine Druckanpassung und alle Versorgungskanäle werden in guter Näherung mit gleichem Flüssigkeitsdruck durch die zu dispensierende Flüssigkeit beaufschlagt.

Über die Versorgungskanäle 34 gelangt die Flüssigkeit in die zweite Druckstufe. Auch hier ist die zweite Druckstufe als Querkanal 32.2 mit größerem Durchmesser ausgeformt. Je nach Durchmesser der vom zweiten Querkanal abgehenden Auslaßkanäle und deren Rohrwiderstand wird die zweite Druckstufe mehr oder weniger vollständig gefüllt, bevor die Flüssigkeit in die Auslaßkanäle 38 eindringt. So wird ein gleichmäßiges, an den Einlaßbereichen der Auslaßkanäle anliegendes Druckprofil erzeugt und ein gleichmäßiges Dispensieren der Flüssigkeit erreicht.

In Figur 6b kommt die erste Druckstufe unterhalb der zweiten Druckstufe zu liegen. Falls der am tiefsten gelegene Punkt des Mündungsbereichs der Versorgungskanäle 34 in den zweiten Querkanal 32.2 höher liegt als der höchste Punkt des ersten Querkanals 32.1 ist gewährleistet, daß der erste Querkanal vollständig aufgefüllt wird, bevor die Flüssigkeit in den zweiten Querkanal gelangt. Dies wiederum fordert ein gleichmäßiges Anfüllen des zweiten Querkanals und resultiert in geringen Unterschieden bei der Flüssigkeitsabgabe der einzelnen Auslaßkanäle 38.

Die in den Figuren 6a und 6b gezeigten Druckstufen sind als Querkanäle ausgeformt die jeweils senkrecht zu den mit ihnen in Verbindung stehenden Kanälen angeordnet sind. Die Querkanäle selbst sind als zylindrische Bohrungen gestaltet. Grundsätzlich können die Druckstufen auch anders ausgeformt sein. Zum Beispiel können rechteckige oder ovale Querschnitte gewählt werden, welche über ihre Längserstreckung variiert werden. Darüber hinaus können die einzelne Kanäle auch schräg ineinander münden. Bevorzugt ist jedoch die senkrechte Anordnung der einzelnen Kanalstufen und die Ausformung der einzelnen Kanäle als zylindrische Bohrungen.

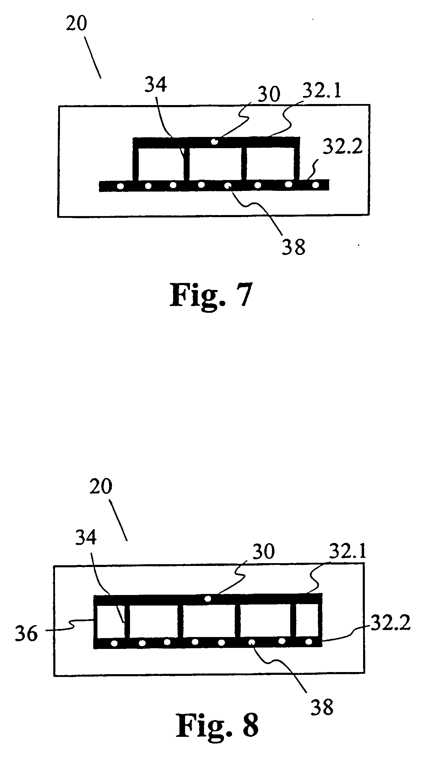

In Figur 7 ist ein bevorzugter erfindungsgemäß ausgeführter Dispensierkopf insbesondere zur Verwendung in einer erfindungsgemäßen Dispensiervorrichtung dargestellt. Der Dispensierkopf weist eine Einlaßöffnung sowie acht Auslaßöffnungen auf, wobei die Einlaßöffnung mittels in dem Dispensierelement angeordneter Kanäle jeweils mit den Auslaßöffnungen verbunden ist. Die Kanalführung von der Einlaßöffnung zu den Auslaßöffnungen erfolgt hierbei so, daß der Einlaßkanal 30, der mit der Einlaßöffnung in dem Dispensierelement verbunden ist, sich zunächst in vier zweite Kanäle verzweigt, die sich wiederum jeweils in je zwei dritte Kanäle verzweigen, wobei jeder der dritten Kanäle mit je einer Auslaßöffnung verbunden ist.

Die Verzweigungspunkte der Kanäle in der jeweiligen Verzweigungsebene kommunizieren hierbei jeweils miteinander. Um eine gleiche Verteilung der durch die Einlaßöffnung einströmenden Flüssigkeit zu gewährleisten, sind die jeweiligen Strömungskanäle so auszuführen, daß der Strömungswiderstand längs der Kanäle zwischen der Einlaßöffnung und einer jeden der acht Auslaßöffnungen gleich groß ist. Dies kann dadurch erfolgen, daß die Kanalquerschnitte lokal oder über jeweils den gesamten Kanalverlauf so variieren, daß die Drosselwirkung von der Einlaßöffnung zu einer jeden der Auslaßöffnungen jeweils gleich groß ist. In dieser Weise ausgelegte Kanäle weisen somit für Flüssigkeiten innerhalb eines großen Viskositätsbereiches gleiche Strömungswiderstände auf, so daß sich die durch die Einlaßöffnung in den Dispensierkopf einströmende Flüssigkeit zu gleichen Teilen auf die Auslaßöffnungen hin verteilt.

In dem in Figur 7 gezeigten Dispenserkopf sind die zwei Druckstufen wiederum als Querkanäle 32.1 und 32.2 ausgeformt und durch zylindrisch Bohrungen verwirklicht. Der Einlaßkanal mündet senkrecht in den ersten Querkanal und speist diesen mit Flüssigkeit. Der Durchmesser des ersten Querkanals 32.1 ist größer als der Durchmesser des mit ihm in direkter Verbindung stehenden Einlaßkanals 30 und die Durchmesser der mit ihm in direkter Verbindung stehenden Versorgungskanäle 34. Wie in dem horizontalen Schnitt durch den Dispenserkopf angedeutet, liegt der erste Querkanal horizontal auf gleicher Ebene bzw. niedriger als der zweite Querkanal. Die vier Versorgungskanäle sind symmetrisch über die Länge des ersten Querkanals verteilt und speisen den zweiten Querkanal. Links und rechts jeder Einmündung eines Versorgungskanals in den zweiten Querkanal 32.2 befindet sich ein Auslaßkanal, so daß ein einzelner Versorgungskanal primär zwei Auslaßkanäle mit Flüssigkeit speist.

Die beiden äußersten Auslaßkanäle befinden sich jeweils im Endbereich des zweiten Querkanals, der dort als Sackloch ausgebildet ist. In diesen Bereichen können sich Flüssigkeitsreste anreichern, die nicht ausgespült werden. Um dies zu vermeiden, kann der an den Enden des zweiten Querkanals befindliche Sackraum bevorzugt so reduziert werden, daß die Enden des zweiten Querkanals bündig in die außen gelegenen Auslaßkanäle übergehen (nicht gezeigt).

In einem bevorzugten Herstellungsverfahren werden die in dem Dispensierkopf anzuordnenden Kanäle jeweils von außen gebohrt. Hierbei entsteht jeweils entweder ein Sackloch, welches dann, mit Ausnahme des Einlaßkanals und der Auslaßkanäle, wieder einseitig zu verschließen ist, oder ein Durchgangsloch, wobei dann, mit den oben erwähnten Ausnahmen, beide Seiten nachträglich zu verschließen sind. Hierbei ist darauf zu achten, daß im Kanalverlauf keine die Strömung negativ beeinflussende Rückstände, z.B. scharfkantige Grate oder dergleichen, verbleiben.

Figur 8 zeigt eine besonders bevorzugte Ausgestaltung des Dispenserkopfes 20 mit einer Einlaßöffnung und acht Auslaßöffnungen. Im Unterschied zum Dispenserkopf gemäß Figur 7, weist der in Figur 8 gezeigte Dispenserkopf 20 zwei zusätzliche Spülkanäle 36 auf, die den ersten und zweiten Querkanal (Druckstufen) miteinander verbinden. Der erste Querkanal ist im Verhältnis zu anderen Ausführungsform länger gezogen und geht an seinen beiden äußeren Enden in die Spülkanäle 36 über. Die Spülkanäle speisen anschließend den zweiten Querkanal an seinen äußeren Enden. Durch diese Anordnung wird verhindert, daß an den Enden der Querkanäle ein Stauraum für Flüssigkeiten entsteht und/oder sich Blasen bilden. Die Spülkanäle dienen der Zirkulation der Flüssigkeit in diesem Abschnitt des Dispensers.

Bevorzugt ist der Durchmesser der Spülkanäle 36 kleiner als der Durchmesser der Versorgungskanäle 34. Die am weitesten außen liegenden Auslaßkanäle werden sowohl vom letzten Versorgungskanal als auch vom Spülkanal mit Flüssigkeit versorgt. Durch eine Verkleinerung des Durchmessers des Spülkanals 36 wird ein zu großer Flüssigkeitsdurchsatz der am Rande liegenden Auslaßkanäle vermieden.

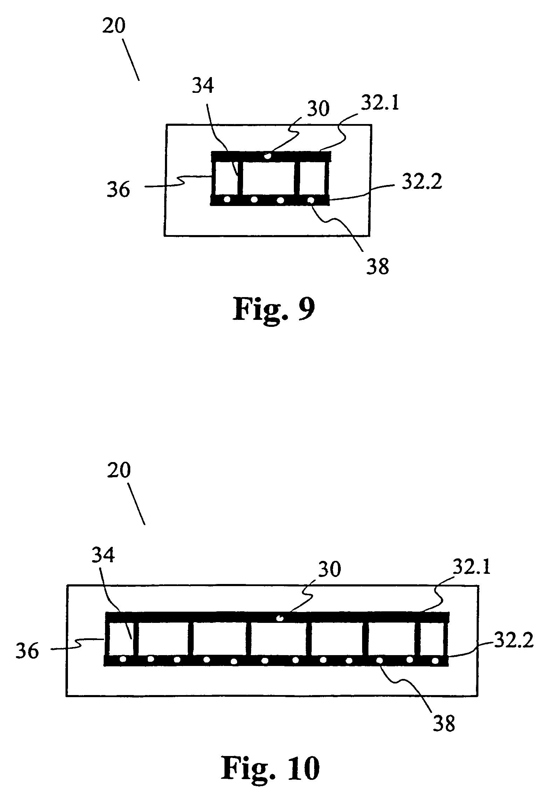

Figur 9 zeigt einen horizontalen Schnitt durch Dispenserkopf 20 mit einem Einlaßkanal und vier Auslaßkanälen. Wie in Figur 8 sind die beiden Druckstufen durch zusätzliche Spülkanäle miteinander verbunden. In der Zeichnung sind funktional ähnliche Merkmale mit gleichen Bezugsziffern belegt. Figur 10 zeigt einen horizontalen Schnitt durch einen Dispenserkopf mit einem Einlaßkanal 30 und zwölf Auslaßkanälen 38. Der Aufbau dieses Dispenserkopfes ist eine systematisch Weiterentwicklung der entsprechenden 4-fach und 8-fach Dispenserköpfe aus Figuren 9 und 8. Selbstverständlich kann auch der 12-fach Dispenserkopf ohne Spülkanäle gefertigt werden, jedoch ist die Verwendung von Spülkanälen von Vorteil. Eine Dispenserkopf mit 10 Auslaßkanälen kann unter Weglassen der beiden äußeren Spülkanäle und der beiden äußeren Auslaßkanäle gefertigt werden. Die Dimensionierung der nun ganz außen liegenden Versorgungskanäle wird empirisch ermittelt. Bevorzugte Ausführungsform ist jedoch der in Figur 8 gezeigte Dispenserkopf mit einem Einlaßkanal und acht Auslaßkanälen.

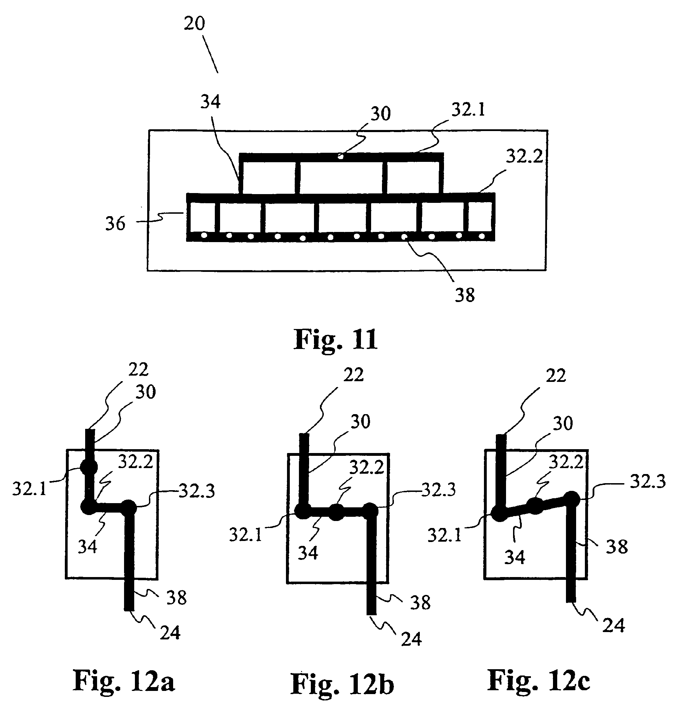

Ein dreistufiger Dispenserkopf 20 mit zwölf Auslaßkanälen ist in Figur 11 gezeigt. Der horizontale Schnitt durch den Dispenserkopf deutet an, daß alle drei Druckstufen im wesentlichen in der gleichen Horizontalen Ebene verlaufen. Es ist auch hier von Vorteil, von der ersten Druckstufe ausgehend zur dritten Druckstufe hin, eine Steigung einzubauen, um ein stufenweises Füllen der einzelnen Druckreservoirs zu erreichen. Die zusätzliche Verwendung einer weiteren Druckstufe sorgt für eine höhere Präzision bei der Abgabe der einzelnen Flüssigkeitsvolumina durch die jeweiligen Auslaßkanäle. Nachteilig ist allerdings das im Verhältnis zum zweistufigen Dispenserkopf größere Gesamtvolumen der im Dispenserkopf speicherbaren Flüssigkeit, da diese bei einem Flüssigkeitswechsel vollständig als Abfall ausgeschieden werden muß. Die erste Druckstufe ist über vier Versorgungskanälen mit der zweiten Druckstufe verbunden; diese ist über sechs Versorgungskanäle und zwei Spülkanäle mit der dritten Druckstufe verbunden. Die Anzahl der zwischen den einzelnen Druckstufen angelegten Versorgungs- und Spülkanäle ist nicht zwingend vorgeschrieben. Variationen von der in Figur 11 gezeigten Version sind möglich ohne von der zu Grunde liegenden erfinderischen Idee abzuweichen.

Die Figuren 12a, 12b und 12c zeigen vertikale Querschnitte durch dreistufige Dispenserköpfe. In 12a liegen die ersten zwei Druckstufen vertikal übereinander, während die dritte Druckstufe sich horizontal auf der selben Ebene befindet wie die zweite Druckstufe. In Figur 12b befinden sich alle drei Druckstufen auf der selben horizontalen Ebene während in Figur 12c die drei Druckstufen von der ersten Druckstufe ausgehend mit einer Steigung versehen sind und die dritte Druckstufe am höchsten liegt. Auch in den hier gezeigten Ausführungsformen der Dispenserköpfen sind die Druckstufen bevorzugt durch Bohrungen realisiert, die bevorzugt einen größeren Durchmesser als die direkt angrenzenden Kanäle aufweisen.

Grundsätzlich ist man bei den Dispenserköpfen um eine symmetrisch Auslegung der Druckstufen und Kanäle bemüht, um ein Präzises Abgeben von genau definierten Flüssigkeitsvolumina durch die einzelnen Auslaßöffnungen zu erreichen. Des weiteren ist es denkbar die Dispenserköpfe mit mehr als einer Einlaßöffnung auszustatten. Die Nützlichkeit einer solche Ausführungsform kann sich bei einer größeren Anzahl von Auslaßöffnungen ergeben.

In einer weiteren bevorzugten Ausführungstorm des Dispensierkopfes sind in einem oder in mehreren Auslaßkanälen Pipetiernadeln angeordnet (nicht gezeigt). Die Pipetiernadeln sind hier als Kapillarröhrchen, vorzugsweise aus Glas, ausgeführt und in einem ersten Teilabschnitt in den jeweiligen Auslaßkanal eingebracht. Ferner ragen die Kapillarröhrchen jeweils zu einem gewissen Teil aus den Auslaßöffnungen heraus.

Die Kapillarröhrchen weisen einen Innen- und einen Außendurchmesser auf. Die Auslaßkanäle sind in dem ersten Teilabschnitt mit einem dem Außendurchmesser der Kapillarröhrchen entsprechenden Öffnungsdurchmesser ausgeführt und in einem zweiten Teilabschnitt, der unmittelbar an den ersten Teilabschnitt angrenzt, mit einem dem Innendurchmesser der Kapillarröhrchen entsprechenden Öffnungsdurchmesser ausgeführt, so daß die Kapillarröhrchen einerseits mittels festsitzender Passung in den dritten Kanälen gehalten werden und andererseits der Übergang für die durch das Dispensierelement strömende Flüssigkeit aus dem jeweiligen Auslaßkanal 38 in das Kapillarröhrchen stoßfrei erfolgt. Mittels des jeweiligen Innendurchmesserverlaufs dieser Pipetiernadeln kann somit auch eine Feinjustierung des Strömungswiderstandes längs eines Verteilerkanals erfolgen, indem beispielsweise ein sich verengender Kanalverlauf innerhalb der Pipetiernadel gewählt wird.

### Bezugszeichenliste

- 1: erste Leitung
- 2: zweite Leitung
- 3: dritte Leitung
- 4: vierte Leitung
- 5: Pumpe (Membranpumpe)
- 7: Ventil (Magnetventil) 2/2 Wege Ventil
- 8: Loopblock
- 9: Druckhalteventil
- 10: Dispensiervorrichtung
- 12: Vorratselement (Pufferflasche)
- 14: Flüssigkeit
- 16: Rückschlagventil
- 18: Ventil (Magnetventil) 3/2 Wege Ventil
- 20: Dispensierkopf
- 22: Einlaßöffnung
- 24: Auslaßöffnung
- 30: Einlaßkanal
- 32.1: erster Querkanal
- 32.2: zweiter Querkanal
- 32.3: dritter Querkanal
- 34: Versorgungskanal
- 36: Spülkanal
- 38: Auslaßkanal

## Patentansprüche

1. Verfahren zum weitgehend automatisierten, feindosierten Dispensieren von Flüssigkeiten, bevorzugt von Reagenzien, **dadurch gekennzeichnet, dass** das Verfahren folgende Arbeitsschritte umfasst:
a) automatisiertes Verfahren des einen Endes eines Leitungssystems (2), (3) in horizontaler und/oder vertikaler Richtung und/oder durch eine Drehbewegung so, dass das Leitungssystem mit einem ausgewählten Vorratsbehälter (12) kommuniziert;
b) Ansaugen der Flüssigkeit aus dem Vorratselement (12) in das Leitungssystem;
c) Aufbau eines zeitlich weitgehend konstanten Druckes der Flüssigkeit in zumindest einem Abschnitt des Leitungssystems, wobei zum Aufbau des zeitlich konstanten Druckes die Flüssigkeit dauernd mittels einer Pumpe (5) gefördert wird und der Druck pumpenaustrittsseitig durch ein Rückführen der Flüssigkeit begrenzt wird;
d) Dosieren der zu dispensierenden Flüssigkeitsmenge durch kurzzeitiges Öffnen einer in dem Leitungssystem angeordneten Schnellschließvorrichtung (7), (18), so dass eine der Öffnungsdauer der Schnellschließvorrichtung und dem Flüssigkeitsdruck entsprechende Flüssigkeitsmenge aus dem Abschnitt des Leitungssystems dispensiert wird.

2. Verfahren gemäß Anspruch 1,
**dadurch gekennzeichnet, dass** unter Verfahrensschritt c) der Druck pumpenaustrittsseitig durch ein druckgesteuertes Rückführen der Flüssigkeit begrenzt wird.

3. Verfahren gemäß einem der Ansprüche 1 oder 2,
**dadurch gekennzeichnet, dass** der Verfahrensschritt c) mehrfach hintereinander wiederholt wird.

4. Verfahren gemäß Anspruch 3,
**dadurch gekennzeichnet, dass** jeweils vor dem Verfahrensschritt c) das andere Ende des Leitungssystems (4) automatisiert horizontal und/oder vertikal und/oder durch eine Drehbewegung so verfahren wird, dass die dosierte Flüssigkeitsmenge in einen oder mehrere ausgewählte Behälter abgegeben wird.

5. Verfahren gemäß einem der Ansprüche 1 bis 4,
**dadurch gekennzeichnet, dass** die Behälter, in die die dosierte Flüssigkeit abgegeben wird, vor dem Verfahrensschritt c) horizontal und/oder vertikal und/oder durch eine Drehbewegung gesteuert verfahren werden.

6. Verfahren gemäß einem der Ansprüche 1 bis 5,
**dadurch gekennzeichnet, dass** bei Überschreiten eines Maximaldruckes im Leitungssystem die Flüssigkeit in das Vorratselement zurückgeführt wird

7. Verfahren gemäß einem der Ansprüche 1 bis 5,
**dadurch gekennzeichnet, dass** bei Überschreiten eines Maximaldruckes im Leitungssystem die Flüssigkeit in einen vor der Pumpe (5) gelegenen Bereich des Leitungssystems zurückgeführt wird.

8. Verfahren gemäß einem der Ansprüche 1 bis 7,
**dadurch gekennzeichnet, dass** das Leitungssystem nach Beenden des Dispensierens der Flüssigkeit mit einer Waschflüssigkeit gewaschen wird.

9. Verfahren gemäß einem der Ansprüche 1 bis 8,
**dadurch gekennzeichnet, dass** das dem Vorratselement (12) zugewandte Ende der Leitung (2) eine Aspiriernadel aufweist.

10. Verfahren gemäß einem der Ansprüche 1 bis 9,
**dadurch gekennzeichnet, dass** an dem dem Vorratselement (12) zugewandten Ende der Leitung (2) und/oder der Aspiriernadel ein Flüssigkeitssensor zum Bestimmen und Regulieren der Eintauchtiefe in die Flüssigkeit des Vorratselements angeordnet ist.

11. Verfahren gemäß einem der Ansprüche 1 bis 10,
**dadurch gekennzeichnet, dass** das dem Vorratselement (12) zugewandte Ende des Leitungssystems (2), (3) und/oder die Aspiriernadel automatisiert zu einem weiteren Vorratselement verfahrbar ist und/oder das Vorratselement automatisiert durch ein anderes Vorratselement austauschbar ist.

12. Verfahren gemäß einem der Ansprüche 1 bis 11,
**dadurch gekennzeichnet, dass** an dem dem Förderelement (5) nachgeordneten Ende des Leitungssystems ein Dispensierelement mit zumindest einer Einlassöffnung und zumindest einer Auslassöffnung angeordnet ist.

13. Verfahren gemäß Anspruch 12,
**dadurch gekennzeichnet, dass** das Dispensierelement als Dispensierkopf (20) ausgebildet ist, der horizontal und/oder in seiner Höhenposition und/oder um eine Drehachse automatisiert verfahrbar ist.

14. Verfahren gemäß einem der Ansprüche 12 oder 13,
**dadurch gekennzeichnet, dass** das Dispensierelement automatisiert austauschbar ist.

15. Verfahren gemäß einem der Ansprüche 1 bis 14,
**dadurch gekennzeichnet, dass** eine oder mehrere der Leitungen des Leitungssystems (1), (2), (3), (4) aus einem leicht verbiegbaren Kunststoff hergestellt sind.

16. Verfahren gemäß einem der Ansprüche 1 bis 15,
**dadurch gekennzeichnet, dass** an dem dem Förderelement (5) nachgeordneten Ende des Leitungssystems und/oder des Dispensierelementes ein oder mehrere Auffangbehälter, in die die dosierte Flüssigkeit abgegeben wird, angeordnet sind.

## Claims

1. Method for the extensively automated and finely dosed dispensing of liquids, preferably of reagents, **characterised in that** the method includes the following working steps:
a) Automated movement of the one end of a line system (2), (3) in a horizontal and/or vertical direction and/or by means of a rotational movement so that the line system communicates with a selected storage container (12);
b) Sucking the liquid out of the storage element (12) into the line system;
c) Building up a pressure of liquid that is extensively constant over a period of time in at least one section of the line system, wherein to build up to the constant pressure over a period of time the liquid is continuously conveyed by means of a pump (5), and the pressure is limited at the outlet side of the pump by a return of liquid;
d) Dosing the quantity of liquid to be dispensed by briefly opening a rapid closing device (7), (18), in the line system so that a quantity of liquid corresponding to the opening time of the rapid closing device and the pressure of the liquid is dispensed from the section of the line system.

2. Method according to Claim 1,
**characterised in that** under method step c) the pressure is limited at the outlet side of the pump by a pressure-controlled return of liquid.

3. Method according to one of Claims 1 or 2,
**characterised in that** method step c) is repeated several times in succession.

4. Method according to Claim 3,
**characterised in that** before method step c) the other end of the line system (4) is automatically moved horizontally and/or vertically and/or by a rotational movement so that the dosed quantity of liquid is dispensed into one or more selected containers.

5. Method according to one of Claims 1 to 4,
**characterised in that** the containers into which the dosed liquid is dispensed, are moved under control horizontally and/or vertically and/or by a rotational movement before method step c).

6. Method according to one of Claims 1 to 5,
**characterised in that** the liquid is returned to the storage element when a maximum pressure in the line system is exceeded.

7. Method according to one of Claims 1 to 5,
**characterised in that** the liquid is returned to a section of the line system before the pump (5) when a maximum pressure in the line system is exceeded.

8. Method according to one of Claims 1 to 7,
**characterised in that** the line system is washed with a washing liquid when the dispensing of the liquid is complete.

9. Method according to one of Claims 1 to 8,
**characterised in that** the end of the line (2) facing the storage element (12) has an aspiration needle.

10. Method according to one of Claims 1 to 9,
**characterised in that** a liquid sensor for determining and controlling the immersion depth in the liquid of the storage element is arranged at the end of the line (2) facing the storage element (12) and/or the aspiration needle.

11. Method according to one of Claims 1 to 10,
**characterised in that** the end of the line system (2), (3) facing the storage element (12) and/or the aspiration needle can be moved automatically to another storage element and/or the storage element can be automatically replaced by another storage element.

12. Method according to one of Claims 1 to 11,
**characterised in that** a dispensing element with at least one inlet opening and at least one outlet opening is arranged at the end of the line system downstream of the conveyor element (5).

13. Method according to Claim 12,
**characterised in that** the dispensing element is designed as a dispensing head (20), which can be automatically moved horizontally and/or in its height and/or about an axis of rotation.

14. Method according to one of Claims 12 or 13,
**characterised in that** the dispensing element can be replaced automatically.

15. Method according to one of Claims 1 to 14,
**characterised in that** one or more of the lines of the line system (1), (2), (3), (4) are made from an easily bendable plastic.

16. Method according to one of Claims 1 to 15,
**characterised in that** one or more receptacles, into which the dosed liquid is dispensed, are arranged at the end of the line system downstream of the conveyor element (5) and/or of the dispensing element.

## Revendications

1. Procédé de distribution largement automatisée et finement dosée de liquides, de préférence des réactifs, **caractérisé en ce qu'**il comprend les étapes de travail suivantes :
a) procédé automatisé de l'une des extrémités d'un système de tuyaux (2), (3) dans la direction horizontale et/ou verticale et/ou selon un mouvement rotatif, si bien que le système de tuyaux communique avec un récipient de réserve déterminé (12) ;
b) aspiration du liquide à partir de l'élément de réserve (12) dans le système de tuyaux ;
c) établissement d'une pression du liquide largement constante dans le temps dans au moins un segment du système de tuyaux, nécessitant que le liquide soit extrait en permanence par une pompe (5) et que la pression au niveau de la sortie de la pompe soit limitée par un retour du liquide ;
d) dosage de la quantité de liquide à distribuer grâce à la brève ouverture de l'un des dispositifs de fermeture rapide (7), (18), disposé à l'intérieur du système de tuyaux, de sorte qu'une quantité de liquide correspondant à la durée d'ouverture dudit dispositif de fermeture rapide ainsi qu'à la pression du liquide soit distribuée à partir de ce segment du système de tuyaux.

2. Procédé selon la revendication 1,
**caractérisé en ce que**, conformément à l'étape c) du procédé, la pression au niveau de la sortie de la pompe est limitée par un retour du liquide commandé par pression.

3. Procédé selon l'une des revendications 1 ou 2,
**caractérisé en ce que** l'étape c) du procédé est répétée à plusieurs reprises successives.

4. Procédé selon la revendication 3,
**caractérisé en ce que**, antérieurement à chaque étape c) du procédé, l'autre extrémité du système de tuyaux (4) est utilisée de manière automatisée à l'horizontale et/ou à la verticale et/ou par l'intermédiaire d'un mouvement rotatif, si bien que la quantité de liquide dosée est déversée dans un ou plusieurs récipients déterminés.

5. Procédé selon l'une des revendications 1 à 4,
**caractérisé en ce que** les récipients dans lesquels le liquide est déversé sont utilisés, antérieurement à l'étape c), de manière commandée, à l'horizontale et/ou à la verticale et/ou par l'intermédiaire d'un mouvement rotatif.

6. Procédé selon l'une des revendications 1 à 5,
**caractérisé en ce que** le liquide est renvoyé dans l'élément de réserve en cas de dépassement d'une pression maximale dans le système de tuyaux.

7. Procédé selon l'une des revendications 1 à 5,
**caractérisé en ce que** le liquide est, en cas de dépassement d'une pression maximale dans le système de tuyaux, renvoyé dans une zone de ce même système de tuyaux située antérieurement à la pompe (5).

8. Procédé selon l'une des revendications 1 à 7,
**caractérisé en ce que** le système de tuyaux est nettoyé par un liquide de lavage à l'issue de la distribution de liquide.

9. Procédé selon l'une des revendications 1 à 8,
**caractérisé en ce que** l'extrémité du tuyau (2) orientée vers l'élément de réserve (12) présente une aiguille d'aspiration.

10. Procédé selon l'une des revendications 1 à 9,
**caractérisé en ce qu'**un détecteur de liquide est positionné au niveau de l'extrémité du tuyau (2) orientée vers l'élément de réserve (12) et/ou de l'aiguille d'aspiration, afin de déterminer et de réguler la profondeur d'immersion dans le liquide de l'élément de réserve.

11. Procédé selon l'une des revendications 1 à 10,
**caractérisé en ce que** l'extrémité du système de tuyaux (2), (3), orientée vers l'élément de réserve (12), et/ou l'aiguille d'aspiration sont utilisables de manière automatisée en vue d'un autre élément de réserve et/ou ledit élément de réserve peut être échangé de manière automatisée et ce également par un autre élément de réserve.

12. Procédé selon l'une des revendications 1 à 11,
**caractérisé en ce qu'**un élément de distribution, pourvu d'un orifice d'entrée et d'un orifice de sortie au moins, est positionné à l'extrémité du système de tuyaux située au-delà de l'élément d'aspiration (5).

13. Procédé selon la revendication 12,
**caractérisé en ce que** l'élément de distribution forme une tête de distribution (20), utilisable de manière automatisée en position horizontale et/ou haute et/ou autour d'un axe rotatif.

14. Procédé selon l'une des revendications 12 ou 13,
**caractérisé en ce que** l'élément de distribution peut être échangé de manière automatisée.

15. Procédé selon l'une des revendications 1 à 14,
**caractérisé en ce qu'**un ou plusieurs tuyaux du système de tuyaux (1), (2), (3), (4) sont fabriqués à partir d'une matière plastique légèrement flexible.

16. Procédé selon l'une des revendications 1 à 15,
**caractérisé en ce qu'**un ou plusieurs récipients d'interception, dans lesquels le liquide dosé est déversé, sont positionnés à l'extrémité du système de tuyaux située au-delà de l'élément d'aspiration (5) et/ou à l'extrémité de l'élément de distribution.
